Europäisches Patentamt

European Patent Office

Office européen des brevets

(11) Publication number: **0 059 696**
**B1**

## (12) EUROPEAN PATENT SPECIFICATION

(45) Date of publication of patent specification: **22.05.85**

(21) Application number: **82850026.4**

(22) Date of filing: **15.02.82**

(51) Int. Cl.⁴: $C\ 09\ J\ 5/02$

(54) **A method for bonding with dispersion adhesives.**

(30) Priority: **02.03.81 SE 8101333**

(43) Date of publication of application:
**08.09.82 Bulletin 82/36**

(45) Publication of the grant of the patent:
**22.05.85 Bulletin 85/21**

(84) Designated Contracting States:
**AT BE CH DE FR GB LI NL**

(56) References cited:
**AU-B- 37 185**
**DE-A-2 240 545**
**FR-A-1 549 040**

(73) Proprietor: **AB CASCO**
**Box 11010**
**S-100 61 Stockholm (SE)**

(72) Inventor: **Karlsson, Ingvar**
**Bohusgatan 35**
**S-116 67 Stockholm (SE)**

(74) Representative: **Schöld, Zaid**
**c/o KemaNobel AB Patents Box 11065**
**S-100 61 Stockholm (SE)**

Courier Press, Leamington Spa, England.

## Description

Background

The present invention relates to a method and a material for bonding with dispersion adhesives. Such adhesives contain a binder, generally a polymeric organic material, which is finely dispersed in a dispersion medium. The dispersion medium is generally water and the dispersion is commonly stabilized with some kind of protective colloid or emulsifier. When the adhesive dries, the particles will form a continuous phase and develop a bond strength which reaches full strength when all of the dispersion medium has been lost. The change from a condition of low viscosity, with the particles separated, to a highly viscous condition, with the particles coalesced, often occurs at a fairly distinct point during the drying.

A number of problems, and partly contradictory requirements, on the properties of the adhesive, arise when this type of adhesive is used. These problems and requirements occur especially when it is difficult to apply a continuous pressure on the parts at the bonding, for example at fitting carpets and in similar processes. For example, a final strong joint is desired, and to achieve this the polymer particles must be of a rather hard material. It is, however, also required that the adhesive has a sufficient initial tackiness so that uneven materials, e.g. tightly rolled carpets, can be kept in place during the first stage of the bonding until the full strength of the joint has developed. A softer material in the adhesive is required for this, or else an addition of resins which act as tackifiers, but these will then also lower the final strength and can also cause other problems, such as reduced resistance to alkali. The initial tackiness must, however, not be so strong that it will no longer be possible to adjust the positions of the parts. For most materials it is desirable to assemble the parts of the joint when the adhesive is in the low viscosity stage, as this gives the best wetting of the surfaces. It is, however, also desirable to allow as much as possible of the dispersion medium to leave before the parts are assembled so that as little as possible of the medium is included in the joint when the materials are dense and to obtain as rapid a development of the full bonding strength as possible after the assembly, as, among other things, an optional temporary pressure then has the greatest effect. If the drying is carried too far the adhesive will, however, be converted to the coagulated condition and it will be more difficult to achieve the wetting. It is thus necessary to be able to judge how far the drying has proceeded, but this is difficult as the drying rate is influenced by many factors, such as the ambient temperature, the air humidity, the thickness of the adhesive layer and the absorbing properties of the substrate. At the fitting, it is further often desired that the adhesive properties are different in different parts of the joint, e.g. that there is greater adhesion at the edges of a carpet.

The Australian patent 37 185/71 suggests the application of a dispersion adhesive on one surface and the application of a coagulating agent for the dispersion on the other surface when glueing paper. Hereby the adhesion between the surfaces is speeded up but no solution is given to the problem of obtaining both a good initial tack and a normal bond strength development or to the other problems involved in manual fitting operations.

The Invention Generally

It is an object of the present invention to eliminate or reduce the above described problems. A special object of the invention is to offer an additional factor and degree of freedom to influence the time and place for precipitation of the binders in the adhesive. A further object of the invention is to make the bonding process independent of factors which influence the drying rate of the adhesive, such as temperature, atmospheric humidity, ventilation, adhesive spread, absorption properties of the surfaces to be joined etc. Another object is to allow different adhesive properties at different parts of the joint surface. Still another object is to offer a bonding method which makes it possible to use cheaper and stronger adhesive compositions.

These objects are achieved by the bonding methods described in the appended claims.

The method of the invention makes use of a component which coagulates the dispersion, which component is applied to the joint, besides the adhesive and separate from this, and this makes it possible to influence the coalescence of the particles in the adhesive to a continuous phase, independent of other factors. According to the invention the component is applied only locally whereby it is possible to obtain different adhesive properties at different parts of the joint. By applying the component on a varying portion of the surface of the joint, the total bonding properties can be made to vary all the way from a strong grab for the fastest possible development of full joint strength to only a weak initial tack for the best adjustability. The bonding can in all these cases be brought about fast, if desired, as it is not necessary to await a partial drying of the adhesive and this gives independence from the influence of external factors on the drying rate. It is particularly advantageous to apply the adhesive on one of the proposed joint surfaces and the coagulating component on the other, as the bonding strength will then develop very rapidly after the assembly in those parts where the component has been applied while also, despite this, there will be sufficient time to obtain a good wetting of the surface which has not been treated with adhesive. Also in this case it is possible to obtain adjustability as only a part of the joint surface has been treated with the component. As the method of the invention reduces the requirements on initial tack in the adhesive composition it is possible to use a somewhat different and often cheaper adhesive composition than generally used. A harder polymer type can for example be used and this improves the final bonding strength of the joint. Further, it is possible to avoid the generally used resin-additives for increasing the tackiness of the dispersion adhesives and this also results in an improved final strength. Further objects and advantages of the present invention will be evident from the more detailed description below.

Detailed Description of the Invention

The invention can be used with all kinds of dispersion adhesives, and hereby is understood such kinds of adhesives wherein the binder is dispersed in the form of particles in a continuous dispersion medium phase and wherein the bond is obtained by the coalescence of the particles into a continuous phase.

The binder is generally an organic polymeric material, synthetic or natural. The polymer can be a rubber, e.g. natural rubber, nitrile rubber, neoprene rubber or styrene/butadiene rubber. Usually the polymer is a thermoplastic product of e.g. polyacrylic acid esters, such as polybutyl acrylate, polyethylhexyl acrylate, polystyrene acrylate or polyacrylonitrile or other thermoplastics such as polyethylenevinyl acetate or polyvinyl acetate. Common adhesive types for dispersion adhesives can be used according to the invention but, as mentioned, it is often possible to use a harder polymer type than normally.

The dispersion medium is generally water, optionally with added minor amounts of solvents, such as alcohols or ketones. A protective colloid or an emulsifier is generally present in the dispersion to stabilize this. Fillers and other additives may be present and the ready-to-use dispersion generally has a dry content of between 50 and 80 per cent by weight.

The bonding strength of the adhesive is generally developed by evaporation of the dispersion medium to the environment, or by absorption of this in the joint surfaces, until the particles come close enough to coalesce. According to the invention this effect shall be amplified or substituted for the effect of a special to the joint applied coagulating component. As coagulating component any substance can be used, other than the joined parts themselves, the presence of which, in contact with the adhesive, gives a coagulation of the particle content of the adhesive. Suitably substances which coagulate the adhesive by absorbing the dispersion medium or by destabilizing the dispersion in another way, so that the particle content is precipitated, are used, either by applying at least two coagulating components of different kinds or by applying a coagulating component which possesses both kinds of precipitation properties, e.g. gypsum.

A coagulating component in the form of an absorption agent for the dispersion medium is suitable to minimize the negative influence of the component addition on the adhesive and to neutralize the effect of the presence of the dispersion medium in the joint, e.g. when bonding dense materials or when the joint surfaces only with difficulty are wetted by the adhesive component. Any substance which removes the dispersion medium from the adhesive faster than it evaporates to the environment can be used, but when the absorption agent is applied to one of the joint surfaces it should, to work in the intended manner, have a greater absorption capacity than the joint surface itself. In most applications it is more important that the absorption agent absorbs the dispersion medium rapidly, than that it has a great total absorption capacity. It is preferred that the absorption agent has a greater tendency to absorb the dispersion medium from a liquid phase than from a vapour phase in equilibrium with the liquid, as it is undesirable that the absorption agent is saturated before the contact with the adhesive. The mechanism for the absorption can vary, but substances which at least partly absorbs the dispersion liquid capillary into the pores are particularly suitable. A swelling of the material can hereby take place. Particularly when water is the dispersion medium, hygroscopic and other materials which can absorb water both from fluid phase and gas phase can be used, e.g. calcium chloride, silica gel etc., but it is preferred that substances which are less susceptible to steam are used, as the absorption agent then can be applied to a joint surface well in advance without becoming saturated with water during storing and also can dry up after an unintended contact with water. Porous materials are suitable, particularly polyhydroxy compounds, such as carbohydrates and especially cellulose based and starch based products have been found suitable.

Coagulating components which coagulates the adhesive by destabilizing the dispersion are suitable to have a fast effect of the component and to allow use of only small amounts of the coagulating component. It might happen that the joined parts themselves influence the coagulation rate and in that case the component should have a greater tendency to coagulate the adhesive, so that a possibility of control is obtained. In principle, any coagulation method which does not destroy the bonding properties of the adhesive can be used according to the invention. The polymer itself can for example be influenced in such a way that the particles coagulate more easily, e.g. by swelling with a solvent or by chemical reaction. It is, however, preferred that the effect of the coagulating component is directed towards the stabilizing system of the dispersion, e.g. protective colloids or surface active agents, as this gives the most rapid effect and the smallest negative effect on the adhesive system. Protective colloids, e.g. polyvinyl alcohol, can be altered by crosslinking by an additon of aluminium chloride or chromate. The effect of surface active agents can be broken by a change of the electrolyte composition and this is a preferred manner to coagulate the dispersion. This can be achieved by addition of heavy metals or salts and also by changing the pH of the dispersion. Substances which have been successfully tested are chlorides, ammonium sulfate and borates. Suitable precipitating agents should, however, be tried out for each individual adhesive system.

To obtain the control advantages according to the invention, the coagulating component shall, as has been mentioned, be applied to the joint separate from the adhesive. It is possible to do this in different ways. If a strong grab immediately at the assembling of the parts is desired, the component can be applied on the same surface as the adhesive. This will lead to a precipitation of the adhesive on the treated parts of the surface so that the adhesive will bond at these spots immediately at the assembling of the joint surfaces. If the component in this case is applied after the adhesive, and on top of this, there is obtained among other things a possibility to decide directly the time and place for the precipitation of the adhesive, which can be used as an efficient aiding means for local jointing and fixation. The coagulating component can also be applied before the adhesive, on the same surface as this. The place for the precipitation must be decided before the adhesive is applied, but the wetting of the opposite surface of the joint will be improved, as compared to the earlier mentioned way of application, as the precipitation will take place from the underside of the adhesive layer. In both the mentioned cases it is also possible to treat the opposite surface of the joint in the same manner, or with adhesive only to improve wetting and adhesion. A preferred manner of applying the coagulating component is, however, to apply the adhesive on one surface of the joint and the coagulating component on the other. The adhesive will then be precipitated as soon as the joint surfaces are brought together, but despite this a satisfactory wetting of the surface not treated with adhesive will take place. Further, all problems connected with undesired mixing of the adhesive and the precipitating agent before the assembly will be avoided. It is of course possible to combine different methods of application.

The uncoagulated adhesive has better wetting ability and offers better possibilities of adjusting the positions of the parts than the coagulated adhesive, but the latter offers a better initial strength than the dispersion. It is generally desirable to combine these advantages and thus to treat only a part of the joint surface with the coagulating component. The component can for example be used only locally to give a good adhesion at spots which are particularly difficult to bond, e.g. at the edges of a fitted part, or to counteract the tendencies of a previously rolled carpet to bend. Alternatively, the component can be applied more uniformly over the surface to generally secure a good bonding between the joined parts while the adhesive binds normally in other places or to adjust in each separate situation the requirement for initial tack to the requirement for post-adjustment possibility. At a more uniform treatment with the components, as above, a suitable part of the surface is between 5 and 90, preferably 5 to 50 per cent. Different patterns for the distribution of the component can be used, e.g. dots, lines, squares or circles. It is also possible to distribute different kinds of coagulating agents on the same or different parts of the joint surface.

The coagulating component can be applied in the form of a liquid or a powder when it is applied in direct connection with the fitting, and powder is then advantageously used when the component is of the absorption type. If one of the joint surfaces are treated a possibility to pre-treat the surface is also obtained, e.g. in such a manner that a liquid containing the component is applied to the joint followed by drying. For example, a carpet can already in connection with its production be provided with a suitable coagulating component in liquid form, which is then dried and fixed in one of the usual heating stages present in the production. In this manner there will be no extra operation step as compared to usual bonding processes, but the fitting will be simplified due to the more secure adhesion obtained by the applied component.

For products having industrially prefabricated coatings of coagulating components and being of a type that may later be mounted by glueing under different conditions, for example carpets, tiles, boards, wall papers etc., it is suitable that the coagulating composition has at least two and preferably several coagulating functions in order to be active against different types of mounting adhesives. In these connections it is hence suitable that both a component able to absorb the dispersion medium of the adhesive and a component active against the stabilizing system of the dispersion is present. The latter component may advantageously include a cationic emulsifying agent, such as quaternary ammonium compounds, since most emulsifying agents in dispersion adhesives either are anionic of nonionic. Suitably also salts in high concentration are present as well as components active against polyvinylalcohol, for example complexing agents such as borates.

Pre-made coatings must adhere well to the product not to loosen at transport and storage and the coating composition should hence include a bonding agent. This agent must be selected not to enclose the components and thereby prevent or retard their function. Suitable bonding agents are fastly soluble in the dispersion medium of the adhesive, i.e. usually water soluble, and synthetic polymer materials of lower molecular weight can be used. Polyethylene glycol, dilutable ketone resins, polyvinyl pyrrolidone and polyethers have successfully been employed. The amount of bonding agent must be kept low and suitably under 30 per cent by weight of the dry weight of the coating composition and preferably below 20 per cent by weight. The bonding agents are only effective for adhering the components of the composition to the surface. They do not add to the final joint strength since the fastly soluble agents lack high strength and the ketone resin does not cure.

The invention can be practiced whenever it is desired to influence the coagulation properties of an adhesive, for example to speed up the bonding. As evident from the description above, the invention is, however, particularly applicable in bonding situations including mounting steps, wherein special presses cannot be used during the bonding or when it takes a long time to reach the full bonding strength of the joint, e.g. when the materials are dense and when bonding at low temperatures or in places with poor ventilation. The invention can also advantageously be used for materials which require a good wetting with the adhesive for obtaining durable joints, e.g. porous materials and materials having fibre-structure in the joint surface, particularly such materials which have a low capacity for absorbing the dispersion medium of the adhesive.

Since the dispersion medium in the adhesive usually is water the invention is of special interest at glueing hydrophobic materials, such as polyesters, polyethylene and glass, especially when these materials are in the form of fibres, like carpets with a fiber material on the reverse side. Normally the glueing of such materials requires repeated pressure load under the slow evaporation of dispersion media in order to secure wetting and even adherence. With a coagulating component according to the invention the bond strength develops fast enough to allow a single press step to be used. The coagulating component furthermore acts to give the materials a more hydrophilic nature. It is, however, preferred to add a special wetting agent, suitably at least 5 per cent by weight and preferably at least 10 per cent by weight of the dry composition. The aforementioned emulsifying agents may constitute a part or the whole amount of wetting agent. Coverage of only a part of the surface with the composition is preferred also in these connections and suitably between 20 and 80 per cent of the surface is treated with the composition.

### Example 1
A coating composition was prepared according to the following (per cent by weight):

10% borax (2.5% solution)
5% amorphous silica gel (Aerosil 200)
10% water dilutable acetone resin (70% dry content)
5% cocodimethylbenzylammonium chloride
5% aluminium chloride (50% dry content)
10% water soluble polyglycol
5% sodium silicate microspheres
50% water.

In this composition the borax component has a coagulating effect against polyvinylalcohols in stabilizing systems and also add to the salt concentration. The silica gel and the aluminium chloride absorbs water and the latter also add to the salt concentration. The ketone resin and the polyglycol act as bonding agents for the composition after drying. The quaternary ammonium compound acts to coagulate systems with anionic stabilizing emulsifying agents and also improves the adherence and wettability of the composition. The microspheres act as a water absorbing and destabilizing filler.

A PVC-carpet with a reverse side of polyester fibres was coated over a part of its surface with the composition in an amount of 100 grams liquid per square meter of the entire carpet surface. Some impermeable plastic substrate surfaces were coated with about 250 g/m$^2$ of ethylenevinylacetate adhesive and polyvinylacetate adhesive respectively and the PVC-carpet was applied immediately. For both types of adhesive strong adhesion was obtained after a few seconds compared to the normal time of several days.

**Claims**

1. Method for glueing impermeable or difficultly wettable sheets of covering products, such as carpets, tiles, boards, wall coverings, to substrates by use of water-based dispersion adhesives including organic polymeric particulate material dispersed in a dispersion medium, the particulate material of which is precipitated at glueing by the presence of a coagulating agent, characterized in,
    a) that between 5 and 90 per cent of the reverse side of the covering product is treated with a liquid composition containing
    I) at least one water absorbent
    II) at least one further component with another coagulating function other than under I) and
    III) a water soluble bonding agent for the composition,
    b) that the applied composition is dried,
    c) that the dispersion adhesive is applied in the joint,
    d) that the impermeable covering product is assembled with the impermeable substrate, and
    e) that a short, light and non-continuous pressure is applied.

2. The method of claim 1, in which the dispersion adhesive is applied to the substrate surface.

3. Covering material in the form of a sheet and including a joint surface adapted for mounting with water-based dispersion adhesives with a coagulating agent for the adhesive, characterized in, that the joint surface is coated with a dry composition containing
    I) at least one water absorbent
    II) at least one further component with another coagulating function other than under I) and
    III) a water soluble bonding agent for the composition.

4. Material according to claim 3, characterized in, that the composition includes a cationic emulsifying agent.

5. Material according to claim 3, characterized in, that the composition includes a salt.

6. Material according to claim 3, characterized in, that the composition includes a wetting agent.

7. Material according to claim 3, characterized in, that the amount of bonding agent does not exceed 20 per cent by weight of the dry composition.

## Patentansprüche

1. Methode zum Leimen undurchlässiger oder schwer benetzbarer Lagen oder Flächen von bedeckenden Erzeugnissen, wie Teppichen, Platten, Fliesen, Kacheln, Kartons, Pappen, Tapeten, auf Substrate durch Verwendung von Dispersionsklebstoffen auf Wasserbasis, umfassend organisches, polymeres Teilchenmaterial, dispergiert in einem Dispersionsmedium, wobei das Teilchenmaterial beim Leimen durch die Anwesenheit eines koagulierenden Mittels ausgefällt wird, dadurch gekennzeichnet, daß

a) zwischen 5 und 90% der Rückseite des bedeckenden Erzeugnisses mit einer flüssigen Zusammensetzung behandelt werden, enthaltend

I) wenigstens ein Wasserabsorptionsmittel

II) wenigstens eine weitere Komponente mit einer anderen koagulierenden Funktion anders als unter I) und

III) ein wasserlösliches Bindemittel für die Zusammensetzung,

b) daß die aufgebrachte Zusammensetzung getrocknet wird,

c) daß der Dispersionsklebstoff auf die Verbindungsstelle aufgebracht wird,

d) daß das undurchlässige, bedeckende Produkt mit dem undurchlässigen Substrat vereinigt wird und

e) daß ein kurzer, leichter und nicht-kontinuierlicher Druck angewandt wird.

2. Methode gemäß Anspruch 1, dadurch gekennzeichnet, daß der Dispersionsklebstoff auf die Substratoberfläche aufgebracht wird.

3. Bedeckendes Material in Form einer Lage oder einer Schicht oder Platte und umfassend eine Verbindungsfläche, welche zum Anbringen bzw. Befestigen mit Dispersionsklebstoffen auf Wasserbasis mit einem koagulierenden Mittel für den Klebstoff angepaßt ist, dadurch gekennzeichnet, daß die Verbindungsfläche überzogen ist mit einer trockenen Zusammensetzung, enthaltend

I) wenigstens ein Wasserabsorptionsmittel

II) wenigstens eine weitere Komponente mit anderer koagulierender Funktion, anders als unter I) und

III) ein wasserlösliches Bindemittel für die Zusammensetzung.

4. Material gemäß Anspruch 3, dadurch gekennzeichnet, daß die Zusammensetzung ein kationisches, emulgierendes Mittel einschließt.

5. Material gemäß Anspruch 3, dadurch gekennzeichnet, daß die Zusammensetzung ein Salz einschließt.

6. Material gemäß Anspruch 3, dadurch gekennzeichnet, daß die Zusammensetzung ein benetzendes Mittel einschließt.

7. Material gemäß Anspruch 3, dadurch gekennzeichnet, daß die Menge an Bindemittel 20 Gew.% der trockenen Zusammensetzung nicht übersteigt.

## Revendications

1. Procédé pour coller des articles pour revêtements en feuilles, imperméables ou difficilement mouillables, tels que tapis, carrelages, panneaux, revêtements de mur, sur des substrats à l'aide d'adhésifs en dispersion à base d'eau comprenant une matière polymère organique divisée en particules, dispersée dans un milieu dispersant, dont la matière divisée en particules est précipitée pendant le collage par la présence d'un agent coagulant, caractérisé en ce que

a) on traite une partie comprise entre 5 et 90 % du côté verso de l'article pour revêtements par une composition liquide contenant

I) au moins un produit absorbant l'eau

II) au moins un autre composant ayant une activité coagulante différente de celle de I) et

III) un agent liant solide hydrosoluble pour la composition,

b) on sèche la composition après son application,

c) on applique l'adhésif en dispersion à l'endroit à coller,

d) on assemble l'article de revêtement imperméable et le substrat imperméable, et

e) on applique une pression courte, légère et non permanente.

2. Procédé selon la revendication 1 dans lequel l'adhésif en dispersion est appliqué sur la surface du substrat.

3. Article de revêtement en forme de feuille pourvu d'une surface à coller adaptée à la fixation avec des adhésifs en dispersion à base d'eau comprenant un agent coagulant pour l'adhésif, caractérisé en ce que la surface à coller est revêtue d'une composition sèche contenant

I) au moins un produit absorbant l'eau

II) au moins un autre composant ayant une activité coagulante différente de celle de I) et

III) un agent liant solide hydrosoluble pour la composition.

4. Article selon la revendication 3, caractérisé en ce que la composition comprend un agent émulsifiant cationique.

5. Article selon la revendication 3, caractérisé en ce que la composition comprend un sel.

6. Article selon la revendication 3, caractérisé en ce que la composition comprend un agent mouillant.

7. Article selon la revendication 3, caractérisé en ce que la quantité d'agent liant n'est pas supérieure à 20 % par rapport au poids de la composition sèche.